(19) Europäisches Patentamt / European Patent Office / Office européen des brevets

(11) **EP 2 156 036 B1**

(12) **FASCICULE DE BREVET EUROPEEN**

(45) Date de publication et mention de la délivrance du brevet:
**12.01.2011 Bulletin 2011/02**

(21) Numéro de dépôt: **08805774.0**

(22) Date de dépôt: **14.05.2008**

(51) Int Cl.:
*F02D 23/00* $^{(2006.01)}$     *F02B 37/013* $^{(2006.01)}$
*F02B 37/18* $^{(2006.01)}$     *F02B 37/16* $^{(2006.01)}$

(86) Numéro de dépôt international:
**PCT/FR2008/050826**

(87) Numéro de publication internationale:
**WO 2008/152269 (18.12.2008 Gazette 2008/51)**

(54) **SYSTEME DE REGULATION DE LA PRESSION DE SURALIMENTATION POUR MOTEUR A COMBUSTION INTERNE A DEUX TURBOCOMPRESSEURS ETAGES**

SYSTEM ZUR REGELUNG DES ÜBERLADUNGSDRUCKS EINES VERBRENNUNGSMOTORS MIT ZWEI GESTUFTEN TURBOLADERN

SYSTEM FOR REGULATING THE SUPERCHARGING PRESSURE OF AN INTERNAL COMBUSTION ENGINE HAVING TWO STAGED TURBOCHARGERS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.06.2007 FR 0755456**

(43) Date de publication de la demande:
**24.02.2010 Bulletin 2010/08**

(73) Titulaire: **Renault SAS**
**92100 Boulogne Billancourt (FR)**

(72) Inventeurs:
- **GUINOIS, Arnaud**
  **F-75013 Paris (FR)**
- **FONTVIEILLE, Laurent**
  **F-91190 Gif Sur Yvette (FR)**
- **MOULIN, Philippe**
  **F-75009 Paris (FR)**
- **SAAB, Ahmad**
  **F-94250 Gentilly (FR)**

(56) Documents cités:
DE-A1-102004 005 945     FR-A- 2 878 285
FR-A- 2 879 251

**Description**

La présente invention concerne un système de régulation de la pression de suralimentation pour moteur à combustion interne, notamment du type diesel, comportant deux étages de turbocompresseurs.

L'utilisation de deux turbocompresseurs étagés dans les moteurs à combustion interne permet d'augmenter la puissance et le couple du moteur et d'améliorer le rendement en réduisant la consommation en carburant.

Dans ce mode de suralimentation, l'un des turbocompresseurs fonctionne à basse pression et est actif dans les faibles régimes du moteur, tandis que l'autre turbocompresseur est actif dans les régimes plus élevés et fonctionne à haute pression.

Le fonctionnement de ces deux turbocompresseurs est contrôlé par un système de régulation.

Des systèmes de régulation de la pression de suralimentation pour moteurs à combustion interne à deux turbocompresseurs étagés ont été décrits notamment dans les documents DE10144663, WO 2005/24201 et FR 2878285.

Dans ces systèmes de régulation les zones de fonctionnement des deux turbocompresseurs sont régulées par des signaux qui commandent des actionneurs qui agissent eux-mêmes sur des papillons qui ouvrent ou ferment des circuits de dérivation - couramment appelés « by pass » par les spécialistes - associés aux deux turbocompresseurs.

Les essais effectués par la Demanderesse ont permis de constater que les systèmes de régulation connus manquaient de robustesse en ce qui concerne la commande des actionneurs précités, ne permettaient pas de maitriser le régime du turbocompresseur haute pression, ce qui entraîne un risque de surrégime et ne comportaient pas de moyens pour prépositionner séparément les actionneurs de commande des deux turbocompresseurs.

Le but de la présente invention est de proposer un système de régulation de la pression de suralimentation pour moteurs à deux turbocompresseurs étagés permettant de remédier aux inconvénients des systèmes connus.

Ce but est atteint selon l'invention, grâce à un système de régulation de la pression de suralimentation pour moteur à combustion interne comportant deux étages de turbocompresseurs, à savoir un turbocompresseur basse pression et un turbocompresseur haute pression, les zones de fonctionnement de chacun des turbocompresseurs étant contrôlées par des papillons commandés par des actionneurs fermant ou ouvrant un circuit de dérivation associé à chacun des turbocompresseurs, caractérisé en ce que ce système comprend des moyens pour élaborer une consigne de pression de suralimentation, des moyens pour transformer cette consigne en une consigne de rapport de compression pour chacun des turbocompresseurs, cette dernière consigne coopérant avec un premier régulateur pour régler le rapport de compression de chacun des turbocompresseurs, ce premier régulateur coopérant avec un second régulateur pour régler le rapport de détente de chacun des turbocompresseurs en fonction d'une valeur de consigne de rapport de détente pour chacun de ces turbocompresseurs, des moyens pour prépositionner les actionneurs de commande des papillons de réglage des pressions à la sortie de chacun des deux turbocompresseurs, les deux régulateurs coopérant avec une unité d'arbitrage adaptée pour commander un actionneur pour modifier la pression à la sortie de l'un des turbocompresseurs ou à la sortie de l'autre turbocompresseur.

De préférence, ce système comprend en outre des moyens de contrôle de l'ouverture du circuit de dérivation relié à la sortie du compresseur du turbocompresseur haute pression coopérant avec un actionneur pour commander l'ouverture de ce circuit de dérivation.

Avantageusement, le système selon l'invention, comprend des moyens pour faire une estimation statique du turbocompresseur BP, en fonction du régime du moteur et du débit d'air à l'entrée du turbocompresseur et à partir de cette estimation calculer les pressions en amont et en aval du compresseur du turbocompresseur HP à l'aide des relations suivantes :

- estimation de la pression en amont du compresseur HP = Mesure de la pression atmosphérique X estimation du rapport de compression BP,
- estimation de la pression en aval de la turbine HP = Mesure de la pression en aval de la turbine BP X taux de détente de la turbine BP.

Selon d'autres particularités de l'invention :

- le système comprend des moyens pour élaborer la consigne de pression de suralimentation au moyen d'une cartographie et des moyens pour corriger cette consigne pour protéger le turbocompresseur actif à l'égard des surrégimes ;
- les deux régulateurs du système coopèrent de façon que le régulateur de rapport de compression corrige la consigne de rapport de détente de la turbine du turbocompresseur ;
- lorsque le turbocompresseur HP est actif,

  - la consigne de rapport de compression correspond à la consigne de rapport de compression HP,
  - la mesure de rapport de compression correspond à la mesure de rapport de compression HP,

- la consigne de rapport de détente de la turbine correspond à la consigne de rapport de détente turbine HP,
- la mesure de rapport de détente de la turbine correspond à la mesure de rapport de détente de la turbine HP,
- le prépositionnement d'actionneur correspond au prépositionnement de l'actionneur HP, et
- le signal de commande correspond au signal de commande à la vanne du circuit de dérivation HP ;

- lorsque le turbocompresseur BP est actif,

- la consigne de rapport de compression correspond à la consigne de rapport de compression BP,
- la mesure de rapport de compression correspond à la mesure de rapport de compression BP,
- la consigne de rapport de détente de la turbine correspond à la consigne de rapport de détente de la turbine BP,
- la mesure de rapport de détente de la turbine correspond à la mesure de rapport de détente de la turbine BP,
- le prépositionnement d'actionneur correspond au prépositionnement de l'actionneur BP, et
- le signal de commande correspond au signal de commande à la vanne du circuit de dérivation BP ;

- les moyens pour élaborer les consignes de rapport de compression des turbocompresseurs BP et HP comprennent des moyens pour mesurer ou estimer la pression en amont du turbocompresseur actif et des moyens pour limiter le rapport de compression pour tenir compte des limites de surrégime du turbocompresseur actif ;
- les consignes de détente des turbines des turbocompresseurs BP et HP sont déterminées à partir de la consigne de rapport de compression en appliquant une correction sur la pression en aval de la turbine ;
- les moyens pour prépositionner les actionneurs de réglage de la pression à la sortie des turbocompresseurs BP et HP sont adaptés pour prépositionner lesdits actionneurs en fonction du fonctionnement stabilisé désiré pour l'un ou l'autre des turbocompresseurs ;
- l'unité d'arbitrage est adaptée pour commander l'ouverture du circuit de dérivation relié à la turbine HP, lorsque le régulateur BP est actif et pour commander la fermeture du circuit de dérivation relié à la turbine BP, lorsque le régulateur HP est actif ; et
- les moyens de contrôle de l'ouverture du circuit de dérivation relié à la sortie du compresseur HP comprennent des moyens pour limiter cette ouverture afin d'éviter un risque de surrégime de la turbine.

D'autres particularités et avantages de l'invention apparaîtront encore tout au long de la description ci-après.

Aux dessins annexés, donnés à titre d'exemples, non limitatifs :

- la figure 1 est un schéma d'ensemble montrant un moteur à combustion interne à deux étages de turbocompresseurs et une unité de commande électronique comportant le système de régulation de la pression de suralimentation selon l'invention,
- la figure 2 est un schéma montrant la structure générale du système de régulation selon l'invention,
- la figure 3 est un schéma illustrant l'estimation statique du turbocompresseur BP,
- la figure 4 est un schéma illustrant la détermination du débit d'air de consigne,
- la figure 5 est un schéma illustrant la détermination de la consigne de pression de suralimentation,
- la figure 6 est un schéma illustrant la structure des régulateurs HP et BP,
- la figure 7 est un schéma illustrant l'élaboration des consignes de rapport de compression BP et HP,
- la figure 8 est un schéma illustrant la mesure du rapport de compression BP et HP,
- la figure 9 est un schéma illustrant l'élaboration des consignes de détente BP et HP,
- la figure 10 est un schéma illustrant le prépositionnement des actionneurs BP et HP,
- la figure 11 est un schéma illustrant l'unité d'arbitrage BP et HP,
- la figure 12 est un autre schéma illustrant l'arbitrage de la figure 11,
- la figure 13 est un schéma illustrant le contrôle de l'ouverture du circuit de dérivation du compresseur HP.

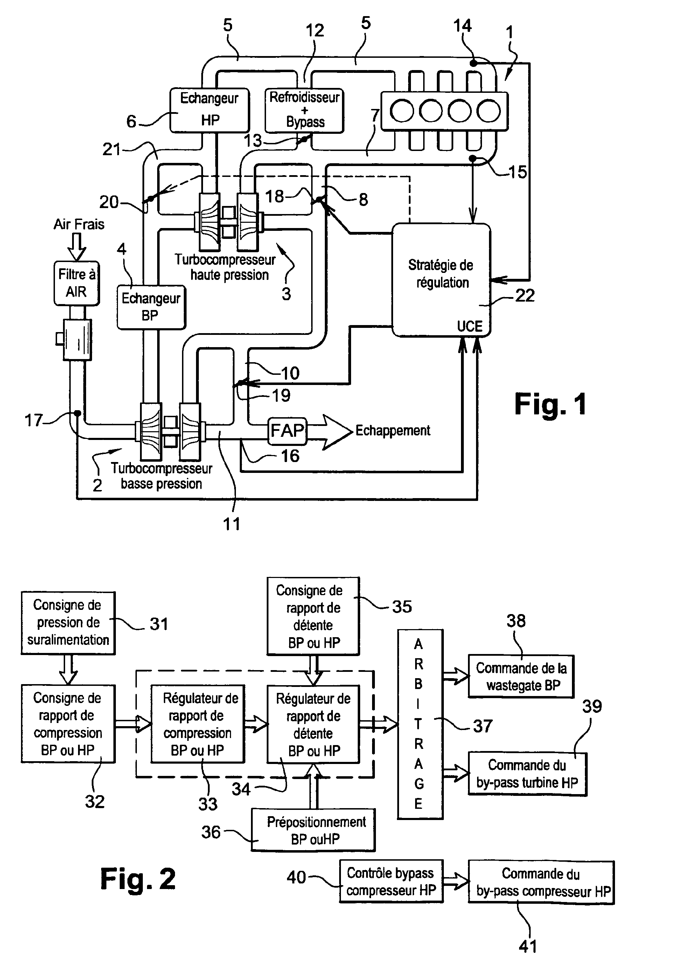

La figure 1 représente un moteur à combustion interne 1 du type diesel comportant deux turbocompresseurs étagés 2 et 3.

Le turbocompresseur 2 appelé turbocompresseur basse pression BP est relié à la pression atmosphérique.

La sortie de son compresseur est reliée à l'entrée du compresseur du turbocompresseur 3 appelé turbocompresseur haute pression HP au travers d'un échangeur basse pression 4.

La sortie du compresseur du turbocompresseur HP est reliée à la tubulure d'admission 5 du moteur 1 au travers d'un échangeur haute pression 6.

La tubulure d'échappement 7 du moteur est reliée à la turbine du turbocompresseur BP et à la turbine du turbocompresseur HP par un circuit de dérivation 8 et un conduit 9, respectivement.

Une dérivation 10 envoie le gaz d'échappement directement dans la ligne d'échappement 11.

Par ailleurs, une dérivation 12 équipée d'une vanne 13 permet de recycler une partie des gaz d'échappement

EP 2 156 036 B1

vers la tubulure d'admission 5.

Un capteur 14 mesure la pression de suralimentation dans la tubulure d'admission 5.

Un autre capteur 15 mesure la pression dans la tubulure d'échappement 7 en amont de la turbine du turbocompresseur HP.

Un troisième capteur de pression 16 mesure la pression en aval de la turbine du turbocompresseur BP.

Un capteur de température 17 mesure la température à l'entrée du compresseur du turbocompresseur BP.

Les dérivations 8 et 10 sont chacune équipées d'un papillon 18, 19 commandé par un actionneur (non représenté).

Un autre papillon 20 peut être prévu dans la dérivation 21 qui relie l'échangeur BP 4 à l'échangeur HP 6.

Le bloc 22 symbolise l'unité de commande électronique UCE du moteur.

Cette unité de commande contient le système de régulation de la pression de suralimentation selon l'invention.

Ce système est relié aux différents capteurs 14, 15, 16, 17 et aux actionneurs des papillons 18, 19 et 20.

La structure du système de régulation précité, comprend (voir figure 2) :

- un bloc 31 d'élaboration d'une consigne de pression de suralimentation qui coopère avec,
- un bloc 32 d'élaboration de consignes de rapport de compression BP ou HP qui coopère avec,
- un bloc 33 de régulation de rapport de compression BP ou HP qui lui-même coopère avec,
- un bloc 34 de régulation de rapport de détente BP ou HP en fonction d'une consigne de rapport de détente BP ou HP reçue d'un bloc 35 et en fonction d'un prépositionnement (voir bloc 36) des actionneurs BP ou HP c'est-à-dire ceux qui commandent respectivement les papillons 19 et 18 représentés sur la figure 1,
- une unité d'arbitrage 37 qui coopère avec le régulateur du bloc 34 pour commander (voir bloc 38) la « wastegate » BP c'est-à-dire le volet 19 ou bien (voir bloc 39) le « by-pass » de la turbine HP c'est-à-dire le volet 18,
- un bloc de contrôle 40 du circuit de dérivation (by-pass) du compresseur HP qui commande (voir bloc 41) l'ouverture ou la fermeture de cette dérivation.

Estimation statique du turbocompresseur BP :

Dans le cas d'un système à double suralimentation, le fonctionnement du système HP est fortement influencé par le système BP. On utilise alors un estimateur statique qui prédit en fonctionnement stationnaire les conditions aux bornes du système BP, puis en entrée du système HP. Ces estimations sont utilisées ensuite pour déterminer les consignes du système HP et les prépositionnements de son actionneur, décrits plus loin.

On souhaite que l'estimation du système BP prenne en compte l'influence des conditions extérieures sur son fonctionnement, pour pouvoir dans la seconde étape les prendre en compte sur les consignes et le prépositionnement HP.

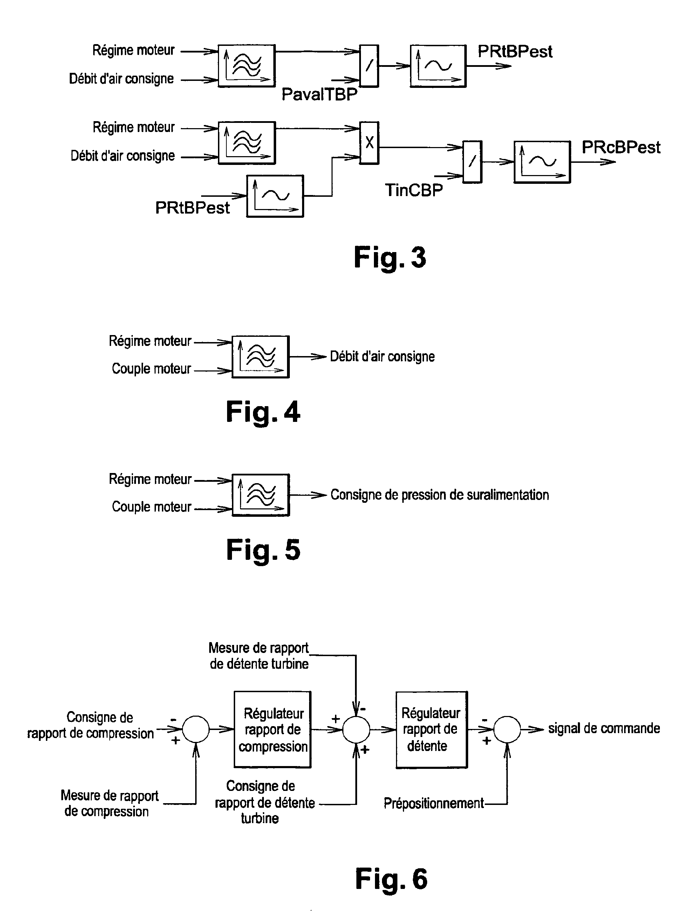

A cet effet, la structure représentée sur la figure 3 est proposée pour estimer en statique les variations des conditions environnementales sur le système BP.

Sur cette figure 3 :

PavalTBP est la mesure de la pression en aval de la turbine BP,
PRtBP est l'estimation du rapport de détente de la turbine BP,
TinCBP est la mesure de la température d'air en entrée du compresseur BP et
PRcBP est l'estimation du rapport de compression BP.

Le débit d'air de consigne est cartographié en régime et couple moteur, comme montré sur la figure 4.

Ensuite, on peut calculer les conditions aux bornes du système HP avec les formules suivantes :

Estimation de la pression en amont du compresseur HP = Mesure de la pression atmosphérique X Estimation du rapport de compression BP

Estimation de la pression en aval de turbine HP = Mesure de la pression aval turbine BP X Taux de détente turbine BP.

Ces grandeurs sont importantes dans la suite des calculs. Elles peuvent être estimées de la façon proposée ici, ou mesurées par des capteurs.

4

Lorsque le système HP est désactivé (c'est-à-dire que le circuit de dérivation du compresseur HP et le circuit de dérivation de la turbine HP sont ouverts, autrement dit, que les papillons 18 et 20 sont en position ouverte) ces estimateurs sont inutiles car les pressions amont compression BP et aval turbine BP sont directement mesurées par des capteurs.

La pression en aval de la turbine BP peut être mesurée par un capteur piézoélectrique placé en amont du filtre à particule (FAP). La variation de pression est traduite en tension qui est mesurable par le calculateur d'injection. Une fois la tension numérisée, elle est traduite en hecto Pascal (HPa) via une table de correspondance.

La température d'air à l'entrée du compresseur BP peut être mesurée par un capteur résistif de type CTN (coefficient de température négatif). La variation de résistance est traduite en tension qui est mesurable par le calculateur d'injection. Une fois la tension numérisée, elle est traduite en degré Kelvin (K°) via une table de correspondance.

La pression atmosphérique peut être mesurée par un capteur piézoélectrique placé en amont du filtre à particule (FAP). La variation de pression est traduite en tension qui est mesurable par le calculateur d'injection. Une fois la tension numérisée, elle est traduite en hecto Pascal (HPa) via une table de correspondance.

Elaboration de la consigne de pression de suralimentation :

La consigne de pression de suralimentation est cartographiée en régime moteur et débit de carburant. Les corrections fonction des conditions environnementales nécessaires pour protéger - notamment des surrégimes - les turbocompresseurs sont différentes suivant le système actif. Si le système BP est actif, les corrections sont similaires à celles d'une simple suralimentation. Par contre, si le système HP est actif, les corrections dépendent des conditions en amont du compresseur HP, donc en aval du compresseur BP.

D'autre part, le régime turbocompresseur est lié au rapport de compression du système. Il convient donc de limiter le rapport de compression consigne plutôt que la consigne de pression de suralimentation pour protéger le compresseur : cette variable est plus représentative d'un comportement physique du système.

Les consignes du régulateur sont donc calculées en plusieurs étapes :

- une première étape qui détermine la consigne de pression de suralimentation donnée par une cartographie simple dépendant du régime et du couple moteur
- une seconde étape déterminant le rapport de compression consigne pour le système actif, prenant en compte la pression de suralimentation consigne et des corrections pour protéger le turbocompresseur actif dépendant des conditions à ses bornes.

La première étape se résume donc à une simple cartographie donnant une consigne correspondant à des réglages du moteur, comme montré sur la figure 5.

Les régulations HP et BP :

Les deux régulations sont exclusives et utilisent les deux mêmes régulateurs 33, 34 et pour cela il suffit alors de les réinitialiser lors des transitions entre les systèmes.

Les deux régulateurs sont dans une configuration dite « en cascade », c'est-à-dire que le régulateur 33 de rapport de compression corrige la consigne de rapport de détente de la turbine.

Le premier régulateur 33 permet de contrôler le rapport de compression BP ou HP et le deuxième régulateur 34 de contrôler le rapport de détente dans les turbines BP ou HP.

Les rapports de compression de chaque système peuvent être soit mesurés par l'intermédiaire de capteurs, soit estimés à partir de l'utilisation de modèles destinés à remplacer ces capteurs.

La figure 6 montre la structure des régulations HP et BP. Selon cette structure, lorsque le système HP est actif,

- la consigne de rapport de compression correspond à la consigne de rapport de compression HP,
- la mesure de rapport de compression correspond à la mesure de rapport de compression HP,
- la consigne de rapport de détente de la turbine correspond à la consigne de rapport de détente turbine HP,
- la mesure de rapport de détente de la turbine correspond à la mesure de rapport de la détente turbine HP,
- le prépositionnement correspond au prépositionnement HP, et
- le signal de commande correspond au signal de commande by-pass HP.

Par ailleurs, lorsque le système BP est actif,

- la consigne de rapport de compression correspond à la consigne de rapport de compression BP,
- la mesure de rapport de compression correspond à la mesure de rapport de compression BP,

- la consigne de rapport de détente de la turbine correspond à la consigne de rapport de détente de la turbine BP,
- la mesure de rapport de détente de la turbine correspond à la mesure de rapport de détente turbine BP,
- le prépositionnement correspond au prépositionnement BP, et
- le signal de commande correspond au signal de commande by-pass BP.

Elaboration des consignes de rapport de compression BP et HP :

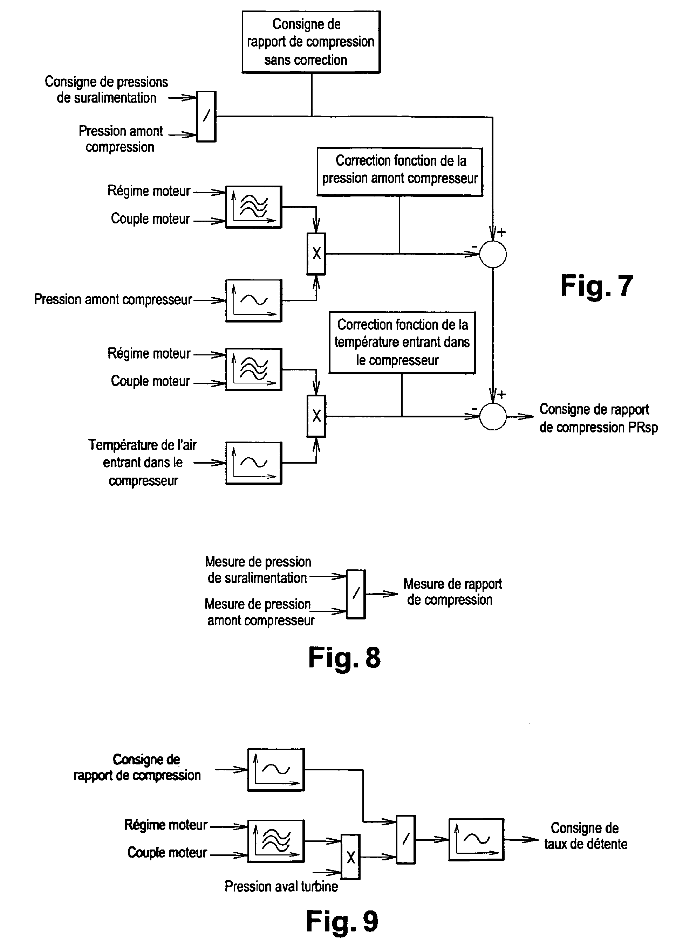

La consigne de rapport de compression est déterminée à partir de la consigne de pression de suralimentation et de la pression en amont du compresseur régulé. Cette pression peut être mesurée ou estimée : dans le cas du compresseur BP, c'est la pression atmosphérique. Pour le compresseur HP, c'est la pression de sortie du compresseur BP, éventuellement corrigée pour tenir compte de la perte de charge de l'échangeur de refroidissement.
Le rapport de compression de consigne est ensuite limité pour tenir compte des limites de surrégime du turbocompresseur actif, d'une façon similaire à celle connue pour un système de simple suralimentation.
Le régulateur agit ensuite sur la consigne correspondant au système actif, comme montré par le schéma de la figure 7.

Mesure des rapports de compression BP et HP :

Cette mesure est illustrée par le schéma de la figure 8.
Lorsque le système HP est actif, la mesure de pression en amont du compresseur correspond à l'estimation de la pression amont compresseur HP
Lorsque le système BP est actif, la mesure de la pression en amont du compresseur correspond à la mesure de la pression atmosphérique.

Elaborations des consignes de détentes BP et HP :

Les consignes de taux de détente dépendent de la consigne de rapport de compression, avec une correction sur la pression en aval de la turbine. A cet effet, la structure représentée sur la figure 9 est proposée.
Selon cette structure, si le système HP est actif, la consigne de rapport de compression correspond à la consigne de rapport de compression HP et la pression en aval de la turbine correspond à l'estimation de la pression en aval de la turbine HP.
Si, par contre, le système BP est actif, la consigne de rapport de compression correspond à la consigne de rapport de compression BP et la pression en aval de la turbine correspond à la mesure de la pression en aval de la turbine BP.

Mesure des rapports de détentes BP et HP :

Quelque soit le système actif (BP ou HP) la pression en amont de la turbine provient du même capteur de pression placé en amont de la turbine HP. En effet, lorsque le système BP est actif le by-pass turbine est complètement ouvert et donc la pression amont turbine HP est égale à la pression en amont de la turbine BP.
Dans ce cas, si le système HP est actif, la mesure du rapport de détente HP correspond à la mesure de la pression en amont de la turbine HP divisée par l'estimation de la pression en aval.
Si, par contre, le système BP est actif, la mesure du rapport de détente BP correspond à la mesure de la pression en amont de la turbine HP divisée par la mesure de la pression en aval de la turbine BP.
La pression en aval de la turbine BP peut être mesurée par un capteur piézoélectrique placé en amont du filtre à particule (FAP). La variation de pression est traduite en tension qui est mesurable par le calculateur d'injection. Une fois la tension numérisée, elle est traduite en hecto Pascal (HPa) via une table de correspondance.

Prépositionnement des actionneurs BP et HP :

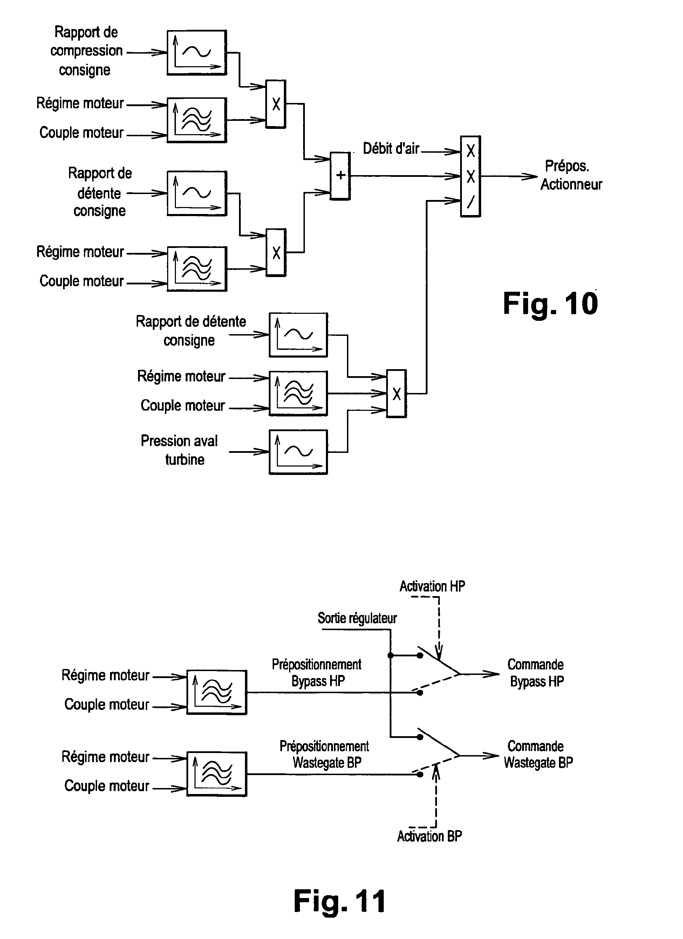

L'objectif du prépositionnement est d'apporter une anticipation au régulateur en boucle fermée, en commandant l'actionneur du système à la valeur correspondant à son fonctionnement stabilisé désiré. Les prépositionnements d'un actionneur dépendent donc d'une mesure ou d'une estimation des conditions aux bornes du turbocompresseur considéré et des consignes de rapport de compression et de détente. A partir des estimations statiques du système BP décrites ci-dessus, on connaît ces conditions pour les deux systèmes (HP et BP). A cet effet, le schéma représenté sur la figure 10 est proposé.

Arbitrage des systèmes BP-HP :

La commande du système actif est donnée par la sortie du régulateur. L'actionneur de l'autre système est prépositionné à une valeur donnée par une cartographie. Lorsque le régulateur BP est actif, la commande bypass turbine HP est normalement commandée complètement ouverte. Lorsque le régulateur HP est actif, la wastegate BP est normalement prépositionnée fermée, mais elle peut être prépositionnée ouverte pour des raisons de dépollution.

Le schéma de la figure 11 explique ce fonctionnement.

L'arbitrage des deux régulations (BP ou HP) dépend de la sortie du régulateur 34 de taux de détente avec une condition sur le signe de l'erreur entre la consigne de rapport de compression et la mesure, pour assurer une hystérésis. Les deux transitions possibles sont alors :

- Si la régulation BP est active, la sortie du régulateur est supérieure à un seuil et l'erreur de régulation est positive, alors on active le régulateur HP et on désactive le régulateur BP.
- Si la régulation HP est active, la sortie du régulateur est inférieure à un seuil et l'erreur de régulation est négative, alors on active le régulateur BP et on désactive le régulateur HP.

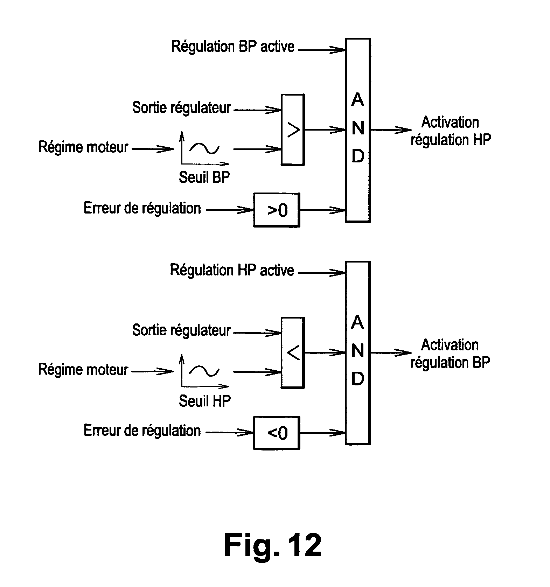

Le schéma de la figure 12 illustre à titre d'exemple l'arbitrage des deux régulations ci-dessus.

Contrôle du by-pass (dérivation) du compresseur HP :

On propose d'utiliser une stratégie similaire à celle présentée plus haut. Cependant, avec la stratégie proposée de transition entre les deux turbos, il faut prendre en compte dans la commande du by-pass (dérivation) du compresseur une condition d'ouverture du by-pass turbine HP pour éviter un risque de surrégime HP.

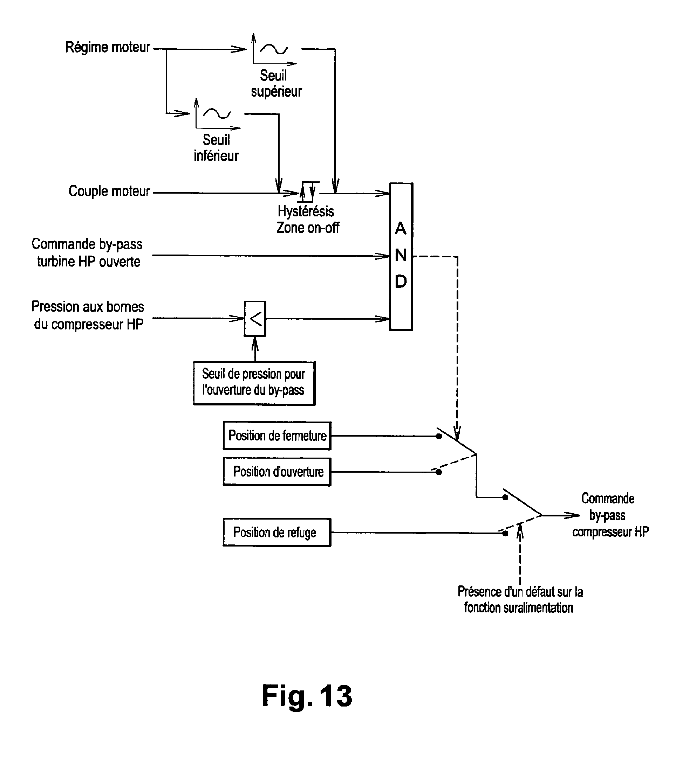

Ce contrôle est illustré par le schéma de la figure 13.

En d'autres termes, le système selon l'invention est contrôlé par une seule régulation composée de deux régulateurs (rapport de compression et rapport de détente turbine), qui agit sur le by-pass de la turbine HP, ou sur la wastegate BP suivant le système en cours de régulation. On considère que les deux actionneurs de commande sont successifs : lorsqu'on est en butée sur un actionneur, on passe sur l'autre. Ainsi, la zone d'utilisation de chaque système (HP ou BP) n'est pas prédéterminée par des cartographies statiques, mais elle est dynamique : elle dépend de l'état du système et du régulateur.

D'autre part, le régime d'un turbocompresseur et le rapport de compression étant liés de façon statique par l'intermédiaire du débit d'air, le système selon l'invention limite le rapport de compression à une valeur maximum pour éviter un surrégime des turbines. Les structures selon l'état de la technique ne prennent pas en compte ce phénomène. Le système selon l'invention transforme la consigne de pression de suralimentation en consigne de rapport de compression pour chaque turbocompresseur. Cette transformation est immédiate lorsque le système BP est utilisé, mais doit passer par un capteur pression supplémentaire ou par modélisation.

On peut ainsi prendre en compte les risques de surrégime, notamment lors des régimes transitoires, dans la consigne du régulateur, ce qui n'était pas le cas dans les structures selon l'état de la technique.

Enfin, en ce qui concerne les prépositionnements des actionneurs, ils doivent être adaptés pour prendre en compte les variations des conditions aux bornes du turbocompresseur. Dans le cas d'un système de simple suralimentation, ce sont les conditions atmosphériques et pression aval turbine. Dans le cas d'un système de double suralimentation, les conditions aux bornes du système HP dépendent du système BP. Il faut donc estimer ces conditions par l'intermédiaire d'un modèle, ou les mesurer. Cette approche, plus physique que celle connue permet une meilleure robustesse du prépositionnement des actionneurs et une diminution du temps de mise au point grâce à une séparation des systèmes.

**Revendications**

1. Système de régulation de la pression de suralimentation pour moteur à combustion interne (1) comportant deux étages de turbocompresseurs (2, 3), à savoir un turbocompresseur basse pression (BP) et un turbocompresseur haute pression (HP), les zones de fonctionnement de chacun des turbocompresseurs (2, 3) étant contrôlées par des papillons (18, 19, 20) commandés par des actionneurs fermant ou ouvrant un circuit de dérivation associé à chacun des turbocompresseurs (2, 3) **caractérisé en ce que** ce système comprend des moyens (31) pour élaborer une consigne de pression de suralimentation, des moyens (32) pour transformer cette consigne en une consigne de rapport de compression pour chacun des turbocompresseurs, cette dernière consigne coopérant avec un premier régulateur (33) pour régler le rapport de compression de chacun des turbocompresseurs, ce premier régulateur (33) coopérant avec un second régulateur (34) pour régler le rapport de détente de chacun des turbocompresseurs en fonction d'une valeur de consigne (35) de rapport de détente pour chacun de ces turbocompresseurs, des moyens pour prépositionner les actionneurs de commande des papillons de réglage des pressions à la sortie de chacun des deux turbocompresseurs, les deux régulateurs (33, 34) coopérant avec une unité d'arbitrage (37) adaptée pour commander un actionneur pour modifier la pression à la sortie de l'un des turbocompresseurs ou à la sortie de l'autre turbocompresseur.

2. Système selon la revendication 1, **caractérisé en ce qu'**il comprend en outre des moyens de contrôle (40) de l'ouverture du circuit de dérivation relié à la sortie du compresseur du turbocompresseur haute pression (3) coopérant avec un actionneur pour commander l'ouverture de ce circuit de dérivation.

3. Système selon l'une des revendications 1 ou 2, **caractérisé en ce qu'**il comprend des moyens pour faire une estimation statique du turbocompresseur BP (2), en fonction du régime du moteur et du débit d'air à l'entrée du turbocompresseur et à partir de cette estimation calculer les pressions en amont et en aval du compresseur du turbocompresseur HP à l'aide des relations suivantes :

- estimation de la pression en amont du compresseur HP = Mesure de la pression atmosphérique X estimation du rapport de compression BP,

- estimation de la pression en aval de la turbine HP = Mesure de la pression en aval de la turbine BP X taux de détente de la turbine BP.

4. Système selon l'une des revendications 1 à 3, **caractérisé en ce qu'**il comprend des moyens pour élaborer la consigne de pression de suralimentation (21) au moyen d'une cartographie et des moyens pour corriger cette consigne pour protéger le turbocompresseur actif à l'égard des surrégimes.

5. Système selon l'une des revendications 1 à 4, **caractérisé en ce que** les deux régulateurs (33, 34) du système coopèrent de façon que le régulateur (33) de rapport de compression corrige la consigne (35) de rapport de détente de la turbine du turbocompresseur.

6. Système selon la revendication 5, **caractérisé en ce que** lorsque le turbocompresseur HP est actif,

   - la consigne de rapport de compression correspond à la consigne de rapport de compression HP,
   - la mesure de rapport de compression correspond à la mesure de rapport de compression HP,
   - la consigne de rapport de détente de la turbine correspond à la consigne de rapport de détente de la turbine HP,
   - la mesure de rapport de détente de la turbine correspond à la mesure de rapport de détente de la turbine HP,
   - le prépositionnement d'actionneur correspond au prépositionnement de l'actionneur HP,
   - le signal de commande correspond au signal de commande à la vanne du circuit de dérivation HP.

7. Système selon l'une des revendications 5 ou 6, **caractérisé en ce que** lorsque le turbocompresseur BP est actif,

   - la consigne de rapport de compression correspond à la consigne de rapport de compression BP,
   - la mesure de rapport de compression correspond à la mesure de rapport de compression BP,
   - la consigne de rapport de détente de la turbine correspond à la consigne de rapport de détente de la turbine BP,
   - la mesure de rapport de détente de la turbine correspond à la mesure de rapport de détente de la turbine BP,
   - le prépositionnement d'actionneur correspond au prépositionnement de l'actionneur BP,
   - le signal de commande correspond au signal de commande à la vanne du circuit de dérivation BP.

8. Système selon l'une des revendications 1 à 7, **caractérisé en ce que** les moyens (32) pour élaborer les consignes de rapport de compression des turbocompresseurs BP et HP comprennent des moyens pour mesurer ou estimer la pression en amont du turbocompresseur actif et des moyens pour limiter le rapport de compression pour tenir compte des limites de surrégime du turbocompresseur actif.

9. Systèmes selon l'une des revendications 1 à 8, **caractérisé en ce que** les consignes de détente des turbines des turbocompresseurs BP et HP sont déterminées à partir de la consigne de rapport de compression en appliquant une correction sur la pression en aval de la turbine.

10. Système selon l'une des revendications 1 à 9, **caractérisé en ce que** les moyens (36) pour prépositionner les actionneurs de réglage de la pression à la sortie des turbocompresseurs BP et HP sont adaptés pour prépositionner lesdits actionneurs en fonction du fonctionnement stabilisé désiré pour l'un ou l'autre des turbocompresseurs.

11. Système selon l'une des revendications 1 à 10, **caractérisé en ce que** l'unité d'arbitrage (37) est adaptée pour commander l'ouverture du circuit de dérivation relié à la turbine HP, lorsque le régulateur BP est actif et pour commander la fermeture du circuit de dérivation relié à la turbine BP, lorsque le régulateur HP est actif.

12. Système selon l'une des revendications 1 à 11, **caractérisé en ce que** les moyens de contrôle de l'ouverture du circuit de dérivation relié à la sortie du compresseur HP comprennent des moyens pour limiter cette ouverture afin d'éviter un risque de surrégime de la turbine.

## Claims

1. System for regulating the supercharging pressure of an internal combustion engine (1) having two turbocharger stages (2, 3), i.e. a low-pressure (LP) turbocharger and a high-pressure (HP) turbocharger, the operating zones of each of the turbochargers (2, 3) being controlled by throttle valves (18, 19, 20) operated by actuators closing or opening a bypass circuit associated with each of the turbochargers (2, 3), **characterized in that** this system comprises means (31) for generating a supercharging pressure setpoint, means (32) for converting this setpoint into a compression ratio setpoint for each of the turbochargers, this latter setpoint cooperating with a first regulator (33) for regulating the compression ratio of each of the turbochargers, this first regulator (33) cooperating with a second regulator (34) for regulating the expansion ratio of each of the turbochargers as a function of an expansion ratio setpoint value (35) for each of these turbochargers, means for prepositioning the actuators which operate the throttle valves for regulating the pressures at the outlet of each of the two turbochargers, the two regulators (33, 34) cooperating with an arbitration unit (37) designed to operate an actuator for modifying the pressure at the outlet of one of the turbochargers or at the outlet of the other turbocharger.

2. System according to Claim 1, **characterized in that** it comprises means (40) for controlling the opening of the bypass circuit connected to the outlet of the compressor of the high-pressure turbocharger (3) cooperating with an actuator for performing the opening of this bypass circuit.

3. System according to either one of Claims 1 or 2, **characterized in that** it comprises means for providing a static estimation of the LP turbocharger (2) as a function of the engine speed and the air flowrate at the turbocharger inlet and, based on this estimation, calculating the pressures upstream and downstream of the compressor of the HP turbocharger with the aid of the following equations:

   - Estimation of the pressure upstream of the HP compressor = Measurement of the atmospheric pressure x estimation of the LP compression ratio;
   - Estimation of the pressure downstream of the HP turbine = Measurement of the pressure downstream of the LP turbine x expansion rate of the LP turbine.

4. System according to any one of Claims 1 to 3, **characterized in that** it comprises means for generating the supercharging pressure setpoint (21) by means of a mapping operation and means for correcting this setpoint so as to protect the active turbocharger against overspeeds.

5. System according to any one of Claims 1 to 4, **characterized in that** the two system regulators (33, 34) cooperate in such a way that the compression ratio regulator (34) corrects the expansion ratio setpoint (35) of the turbocharger turbine.

6. System according to Claim 5, **characterized in that** when the HP turbocharger is active,

   - the compression ratio setpoint corresponds to the HP compression ratio setpoint,
   - the compression ratio measurement corresponds to the HP compression ratio measurement,
   - the expansion ratio setpoint of the turbine corresponds to the expansion ratio setpoint of the HP turbine,
   - the expansion ratio measurement of the turbine corresponds to the expansion ratio measurement of the HP turbine,
- the actuator prepositioning corresponds to the HP actuator prepositioning, and
- the control signal corresponds to the control signal at the valve of the HP bypass circuit.

7. System according to either one of Claims 5 or 6, **characterized in that** when the LP turbocharger is active,

- the compression ratio setpoint corresponds to the LP compression ratio setpoint,
- the compression ratio measurement corresponds to the LP compression ratio measurement,
- the expansion ratio setpoint of the turbine corresponds to the expansion ratio setpoint of the LP turbine,
- the expansion ratio measurement of the turbine corresponds to the expansion ratio measurement of the LP turbine,
- the actuator prepositioning corresponds to the LP actuator prepositioning, and
- the control signal corresponds to the control signal at the valve of the LP bypass circuit.

8. System according to any one of Claims 1 to 7, **characterized in that** the means (32) for generating the compression ratio setpoints of the LP and HP turbochargers comprise means for measuring or estimating the pressure upstream of the active turbocharger and means for limiting the compression ratio so as to take account of the overspeed limits of the active turbocharger.

9. Systems according to any one of Claims 1 to 8, **characterized in that** the expansion setpoints of the LP and the HP turbocharger turbines are determined from the compression ratio setpoint by correcting the pressure downstream of the turbine;

10. System according to any one of Claims 1 to 9, **characterized in that** the means (36) for prepositioning the actuators for regulating the pressure at the outlet of the LP and HP turbochargers are designed to preposition the said actuators depending on the stabilized operation which is desired for one or other of the turbochargers.

11. System according to any one of Claims 1 to 10, **characterized in that** the arbitration unit (37) is designed to perform the opening of the bypass circuit connected to the HP turbine, when the LP regulator is active, and to perform the closing of the bypass circuit connected to the LP turbine, when the HP regulator is active.

12. System according to any one of Claims 1 to 11, **characterized in that** the means for controlling the opening of the bypass circuit connected to the outlet of the HP compressor comprise means for limiting said opening so as to prevent the risk of overspeed of the turbine.

**Patentansprüche**

1. System zur Regelung des Ladedrucks für einen Verbrennungsmotor (1), der zwei Stufen von Turboladern (2, 3) aufweist, d.h. einen Niederdruck-Turbolader (BP) und einen Hochdruck-Turbolader (HP), wobei die Betriebszonen jedes dieser Turbolader (2, 3) von von Stellgliedern gesteuerten Drosselklappen (18, 19, 20) überwacht werden, die einen jedem der Turbolader (2, 3) zugeordneten Bypass schließen oder öffnen, **dadurch gekennzeichnet, dass** dieses System Einrichtungen (31), um einen Ladedrucksollwert zu erarbeiten, Einrichtungen (32), um diesen Sollwert in einen Verdichtungsverhältnissollwert für jeden der Turbolader umzuwandeln, wobei dieser letztere Sollwert mit einem ersten Regler (33) zusammenwirkt, um das Verdichtungsverhältnis jedes der Turbolader zu regeln, wobei dieser erste Regler (33) mit einem zweiten Regler (34) zusammenwirkt, um das Entspannungsverhältnis jedes der Turbolader in Abhängigkeit von einem Entspannungsverhältnissollwert (35) für jeden dieser Turbolader zu regeln, Einrichtungen zur Vorpositionierung der Stellglieder zur Steuerung der Drosselklappen zur Regelung der Drücke am Ausgang jedes der zwei Turbolader enthält, wobei die zwei Regler (33, 34) mit einer Entscheidungseinheit (37) zusammenwirken, um ein Stellglied zu steuern, um den Druck am Ausgang eines der Turbolader oder am Ausgang des anderen Turboladers zu ändern.

2. System nach Anspruch 1, **dadurch gekennzeichnet, dass** es außerdem Überwachungseinrichtungen (40) der Öffnung des mit dem Ausgang des Verdichters des Hochdruck-Turboladers (3) verbundenen Bypasses enthält, die mit einem Stellglied zusammenwirken, um die Öffnung dieses Bypasses zu steuern.

3. System nach einem der Ansprüche 1 oder 2, **dadurch gekennzeichnet, dass** es Einrichtungen enthält, um eine statische Schätzung des BP-Turboladers (2) in Abhängigkeit von der Drehzahl des Motors und vom Luftdurchsatz am Eingang des Turboladers durchzuführen und ausgehend von dieser Schätzung die Drücke vor und hinter dem Verdichter des HP-Turboladers mit Hilfe der folgenden Beziehungen zu berechnen:

```
-    Schätzung  des  Drucks  vor  dem  HP-Verdichter  =
Messung  des  Atmosphärendrucks  X  Schätzung  des  BP-
Verdichtungsverhältnisses,
```

```
-    Schätzung  des  Drucks  hinter  der  HP-Turbine  =
Messung  des  Drucks  hinter  der  BP-Turbine  X
Entspannungsgrad  der  BP-Turbine.
```

4. System nach einem der Ansprüche 1 bis 3, **dadurch gekennzeichnet, dass** es Einrichtungen, um den Ladedrucksollwert (21) mittels eines Kennfelds zu erarbeiten, und Einrichtungen enthält, um diesen Sollwert zu korrigieren, um den aktiven Turbolader vor Überdrehzahlen zu schützen.

5. System nach einem der Ansprüche 1 bis 4, **dadurch gekennzeichnet, dass** die zwei Regler (33, 34) des Systems so zusammenwirken, dass der Verdichtungsverhältnisregler (33) den Entspannungsverhältnissollwert (35) der Turbine des Turboladers korrigiert.

6. System nach Anspruch 5, **dadurch gekennzeichnet, dass**, wenn der HP-Turbolader aktiv ist,

- der Verdichtungsverhältnissollwert dem HP-Verdichtungsverhältnissollwert entspricht,
- die Verdichtungsverhältnismessung der HP-Verdichtungsverhältnismessung entspricht,
- der Entspannungsverhältnissollwert der Turbine dem Entspannungsverhältnissollwert der HP-Turbine entspricht,
- die Entspannungsverhältnismessung der Turbine der Entspannungsverhältnismessung der HP-Turbine entspricht,
- die Stellglied-Vorpositionierung der Vorpositionierung des HP-Stellglieds entspricht,
- das Steuersignal dem Steuersignal am Ventil des HP-Bypasses entspricht.

7. System nach einem der Ansprüche 5 oder 6, **dadurch gekennzeichnet, dass**, wenn der BP-Turbolader aktiv ist,

- der Verdichtungsverhältnissollwert dem BP-Verdichtungsverhältnissollwert entspricht,
- die Verdichtungsverhältnismessung der BP-Verdichtungsverhältnismessung entspricht,
- der Entspannungsverhältnissollwert der Turbine dem Entspannungsverhältnissollwert der BP-Turbine entspricht,
- die Entspannungsverhältnismessung der Turbine der Entspannungsverhältnismessung der BP-Turbine entspricht,
- die Stellglied-Vorpositionierung der Vorpositionierung des BP-Stellglieds entspricht,
- das Steuersignal dem Steuersignal am Ventil des BP-Bypasses entspricht.

8. System nach einem der Ansprüche 1 bis 7, **dadurch gekennzeichnet, dass** die Einrichtungen (32) zur Erarbeitung der Verdichtungsverhältnissollwerte der BP-und HP-Turbolader Einrichtungen, um den Druck vor dem aktiven Turbolader zu messen oder zu schätzen, und Einrichtungen enthalten, um das Verdichtungsverhältnis zu begrenzen, um die Überdrehzahlgrenzen des aktiven Turboladers zu berücksichtigen.

9. System nach einem der Ansprüche 1 bis 8, **dadurch gekennzeichnet, dass** die Entspannungssollwerte der Turbinen der BP- und HP-Turbolader ausgehend vom Verdichtungsverhältnissollwert bestimmt werden, indem an den Druck hinter der Turbine eine Korrektur angewendet wird.

10. System nach einem der Ansprüche 1 bis 9, **dadurch gekennzeichnet, dass** die Einrichtungen (36) zur Vorpositionierung der Stellglieder zur Regelung des Drucks am Ausgang der BP- und HP-Turbolader geeignet sind, um die Stellglieder in Abhängigkeit vom für den einen oder anderen der Turbolader gewünschten stabilisierten Betrieb vorzupositionieren.

11. System nach einem der Ansprüche 1 bis 10, **dadurch gekennzeichnet, dass** die Entscheidungseinheit (37) geeignet ist, um das Öffnen des mit der HP-Turbine verbundenen Bypasses zu steuern, wenn der BP-Regler aktiv ist, und um das Schließen des mit der BP-Turbine verbundenen Bypasses zu steuern, wenn der HP-Regler aktiv ist.

12. System nach einem der Ansprüche 1 bis 11, **dadurch gekennzeichnet, dass** die Überwachungseinrichtungen der Öffnung des mit dem Ausgang des HP-Verdichters verbundenen Bypasses Einrichtungen enthalten, um diese Öffnung zu begrenzen, um eine Gefahr der Überdrehzahl der Turbine zu vermeiden.

**Fig. 1**

Air Frais

Filtre à AIR

Echangeur HP

Refroidisseur + Bypass

Echangeur BP

Turbocompresseur haute pression

Turbocompresseur basse pression

FAP

Echappement

Stratégie de régulation

UCE

**Fig. 2**

Consigne de pression de suralimentation — 31

Consigne de rapport de compression BP ou HP — 32

Régulateur de rapport de compression BP ou HP — 33

Régulateur de rapport de détente BP ou HP — 34

Consigne de rapport de détente BP ou HP — 35

Prépositionnement BP ouHP — 36

ARBITRAGE — 37

Commande de la wastegate BP — 38

Commande du by-pass turbine HP — 39

Contrôle bypass compresseur HP — 40

Commande du by-pass compresseur HP — 41

13

Régime moteur →

Débit d'air consigne →

PavalTBP

→ / → ≈ → PRtBPest

Régime moteur →

Débit d'air consigne →

PRtBPest →

X →

TinCBP

→ / → ≈ → PRcBPest

# Fig. 3

Régime moteur →

Couple moteur →

→ Débit d'air consigne

# Fig. 4

Régime moteur →

Couple moteur →

→ Consigne de pression de suralimentation

# Fig. 5

Mesure de rapport de détente turbine

Consigne de rapport de compression

Mesure de rapport de compression

− +

Régulateur rapport de compression

Consigne de rapport de détente turbine

+ −

+

Régulateur rapport de détente

Prépositionnement

− +

→ signal de commande

# Fig. 6

Consigne de
rapport de compression
sans correction

Consigne de pressions
de suralimentation →

Pression amont →
compression

/

Correction fonction de la
pression amont compresseur

Régime moteur →

Couple moteur →

X

Pression amont compresseur →

- +

Régime moteur →

Couple moteur →

Correction fonction de la
température entrant dans
le compresseur

X

- +

Consigne de rapport
de compression PRsp

Température de l'air
entrant dans le
compresseur →

## Fig. 7

Mesure de pression
de suralimentation →

Mesure de pression
amont compresseur →

/

Mesure de rapport
de compression

## Fig. 8

Consigne de
rapport de compression →

Régime moteur →

Couple moteur →

X

/

Consigne de
taux de détente

Pression aval turbine

## Fig. 9

Rapport de
compression
consigne

Régime moteur

Couple moteur

Rapport de
détente
consigne

Régime moteur

Couple moteur

X

X

+

Débit d'air

X
X
/

Prépos.
Actionneur

Rapport de détente
consigne

Régime moteur

Couple moteur

Pression aval
turbine

X

# Fig. 10

Régime moteur

Couple moteur

Prépositionnement
Bypass HP

Sortie régulateur

Activation HP

Commande
Bypass HP

Régime moteur

Couple moteur

Prépositionnement
Wastegate BP

Commande
Wastegate BP

Activation BP

# Fig. 11

Régulation BP active ⟶ [AND]

Sortie régulateur ⟶ [>]

Régime moteur ⟶ ⟍⟍ ⟶

Seuil BP

Erreur de régulation ⟶ [>0] ⟶ [AND] ⟶ Activation régulation HP

Régulation HP active ⟶ [AND]

Sortie régulateur ⟶ [<]

Régime moteur ⟶ ⟍⟍ ⟶

Seuil HP

Erreur de régulation ⟶ [<0] ⟶ [AND] ⟶ Activation régulation BP

# Fig. 12

**Fig. 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10144663
- WO 200524201 A
- FR 2878285